# EUROPÄISCHE PATENTANMELDUNG

(11) **EP 4 329 181 A1**
(43) Veröffentlichungstag der Anmeldung: **28.02.2024**
(21) Anmeldenummer: 22191487.2
(22) Anmeldetag: 22.08.2022
(51) Int. Cl.: H02M 7/483, H02M 7/757, H02M 1/00, H02M 1/32, H02H 9/04

(54) **MODULARER BREMSSTELLER MIT HYBRIDEM AUFBAU**

(71) Anmelder: Siemens Aktiengesellschaft, 80333 München (DE)
(72) Erfinder: Hofmann, Viktor, 95448 Bayreuth (DE); Hofstetter, Patrick, 91056 Erlangen (DE)
(74) Vertreter: Siemens Patent Attorneys

(57) **Zusammenfassung**

Die Erfindung betrifft einen modularen Bremssteller (1), aufweisend einen Bremswiderstand (3) und mindestens zwei Submodule (2), wobei der Bremswiderstand (3) und die Submodule (2) in einer Reihenschaltung (4) angeordnet sind. Zur Verbesserung des modularen Bremsstellers (1) wird vorgeschlagen, dass mindestens ein Submodul (2) als Vollbrückenmodul (21) und mindestens ein Submodul (2) als Doppelhalbbrückenmodul (22) ausgebildet ist. Weiter betrifft die Erfindung einen elektrischen Antrieb (10), aufweisend einen derartigen modularen Bremssteller (1) und einen Stromrichter (5), wobei der Stromrichter (5) gleichspannungsseitig mit dem modularen Bremssteller (1) elektrisch verbunden ist. Die Erfindung betrifft ferner ein Verfahren zum Betreiben eines derartigen modularen Bremsstellers (1) oder eines derartigen elektrischen Antriebs (10), wobei die Submodule (2) eine Spannung (u_{BR}) über den in Reihe angeordneten Submodulen (2) erzeugen, die zumindest zeitweise einen negativen und einen positiven Spannungsbereich umfassen.

## Beschreibung

Die Erfindung betrifft einen modularen Bremssteller, aufweisend einen Bremswiderstand und mindestens zwei Submodule, wobei der Bremswiderstand und die Submodule in einer Reihenschaltung angeordnet sind. Weiter betrifft die Erfindung einen elektrischen Antrieb, aufweisend einen derartigen modularen Bremssteller und einen Stromrichter, wobei der Stromrichter gleichspannungsseitig mit dem modularen Bremssteller elektrisch verbunden ist. Die Erfindung betrifft ferner ein Verfahren zum Betreiben eines derartigen modularen Bremsstellers oder eines derartigen elektrischen Antriebs.

Ein modularer Multilevel-Stromrichter ist aus der DE 10 103 031 A1 bekannt. Dieser, auch als M2C oder MMC bekannte Stromrichter, besitzt eine Konverter-Topologie, die aufgrund des Aufbaus mit Submodulen insbesondere für Mittel- und Hochspannungsanwendungen geeignet ist. Der Grundaufbau des mehrphasigen Konverters umfasst zwei Konverterarme pro Phase, die jeweils eine Reihenschaltung von Submodulen aufweisen. Dabei sind die beiden Konverterarme am Phasenanschluss miteinander verbunden. Die andere Seite der Konverterarme ist mit der Gleichspannungsseite verbunden. Die Wechselspannungsseite des modularen Multilevel-Stromrichters wird durch einen oder mehrere Phasenanschlüsse gebildet. Im grundlegenden Aufbau kann mit dem Konverter Energie zwischen der Gleichspannungsseite und der Wechselspannungsseite bidirektional übertragen oder in einem gewissen Maß zwischengespeichert werden.

Um zusätzlich einen gezielten Energieabbau zu ermöglichen, ist die Installation eines Bremsstellers zweckmäßig. Ein modularer Bremsstellers ist aus der WO 2007/023061 A2 bekannt. Der modulare Bremssteller wird üblicherweise an die Gleichspannungsseite des modularen Multilevel-Stromrichters beispielsweise zwischen einem DC+ und einem DC- Anschluss angeschlossen.

Der Widerstand einer Bremsstelleranordnung wird oftmals auch als Bremswiderstand bezeichnet, da dieser dazu geeignet ist, elektrische Energie einer elektrischen Maschine, die aufgrund eines Bremsvorgangs erzeugt wird, in Wärme umzuwandeln. Dabei ist die Verwendung eines Bremsstellers nicht auf die Anwendung eines bremsenden elektrischen Antriebs beschränkt. So muss es sich nicht notwendigerweise um Bremsenergie handeln, die in Wärme umgewandelt wird. Der Bremssteller kann beispielsweise auch zur Stabilisierung eines Energieversorgungsnetzes eingesetzt werden, indem er elektrische Energie aus dem Energieversorgungsnetz in Wärme umwandelt. Der Begriff Bremswiderstand wurde gewählt, um den Widerstand, in dem eine vorgegebene elektrische Energie bzw. Leistung in Wärme bzw. Wärme pro Zeit umgesetzt wird, von anderen Widerständen unterscheiden zu können.

Mit der Bezeichnung, eine in Wärme umzusetzende Leistung ist im Folgenden gemeint, dass das Integral der Leistung über die Zeit in Wärme umgesetzt wird. Mit anderen Worten wird eine sich aus der Leistung über die Zeit ergebende Energiemenge in Wärme umgesetzt.

Der Erfindung liegt die Aufgabe zugrunde, einen modularen Bremssteller zu verbessern.

Diese Aufgabe wird durch einen modularen Bremssteller gelöst, wobei der modulare Bremssteller einen Bremswiderstand und mindestens zwei Submodule aufweist, wobei der Bremswiderstand und die Submodule in einer Reihenschaltung angeordnet sind, wobei mindestens ein Submodul als Vollbrückenmodul und mindestens ein Submodul als Doppelhalbbrückenmodul ausgebildet ist. Weiter wird diese Aufgabe durch einen elektrischen Antrieb gelöst, wobei der elektrische Antrieb einen derartigen modularen Bremssteller und einen Stromrichter aufweist, wobei der Stromrichter gleichspannungsseitig mit dem modularen Bremssteller elektrisch verbunden ist. Diese Aufgabe wird ferner durch ein Verfahren zum Betreiben eines derartigen modularen Bremsstellers oder eines derartigen elektrischen Antriebs gelöst, wobei die Submodule eine Spannung über den in Reihe angeordneten Submodulen erzeugen, die zumindest zeitweise einen negativen und einen positiven Spannungsbereich umfassen.

Weitere vorteilhafte Ausgestaltungen der Erfindung sind in den abhängigen Ansprüchen angegeben.

Der Erfindung liegt unter anderem die Erkenntnis zugrunde, dass es die Kombination von mindestens einem Vollbrückenmodul und einem Doppelhalbbrückenmodul erlaubt, über der Reihenschaltung von Submodulen eine negative Spannung anzulegen. Diese negative Spannung ist so gerichtet, dass die am Bremswiderstand anliegende Spannung größer ist als die Zwischenkreisspannung, die an den Anschlüssen des modularen Bremsstellers anliegt. Durch die Vergrößerung der Spannung an dem Bremswiderstand kann eine höhere Leistung durch den modularen Bremssteller in Wärme umgewandelt werden. Dabei entspricht die Wärme der über die Zeit integrierte Leistung.

Der Bremswiderstand kann an beliebiger Stelle in der Reihenschaltung angeordnet sein. Beispielsweise kann der Bremswiderstand zwischen einem der Anschlüsse des modularen Bremsstellers und einem Submodul oder an beliebiger Stelle zwischen zwei Submodulen angeordnet sein. Der Bremswiderstand kann sich auch aus der Summe mehrerer in Reihe angeordneter Teilwiderstände ergeben. Die Teilwiderstände, die an unterschiedlichen Positionen in der Reihenschaltung angeordnet sein können, wirken zusammen wie ein Bremswiderstand in der Reihenschaltung.

Mit der Anzahl an Submodulen lässt sich der modulare Bremssteller an die Zwischenkreisspannung eines Stromrichters derart vorteilhaft anpassen, dass er mit einem beliebigen Stromrichter, insbesondere mit einem modularen Multilevel-Stromrichter, verbunden werden kann. Zur Skalierung auf höhere Spannungen und zum Betrieb bei unterschiedlichen Betriebspunkten können eine beliebige Anzahl von Vollbrückenmodulen, Halbbrückenmodulen und Widerständen in beliebiger Reihenfolge in Serie angeordnet bzw. geschaltet werden.

Mit Hilfe der in den Submodulen angeordneten Halbleiterschaltern können an den Anschlüssen der jeweiligen Submodule unterschiedliche Spannungen erzeugt werden. Bei einem Vollbrückenmodul können auch Spannungen mit unterschiedlichem Vorzeichen erzeugt werden. Bei dem Doppelhalbbrückenmodul sind im aktiven Betrieb vier definierte Schaltzustände erzeugbar: die Spannung null, die erste Kondensatorspannung, die zweite Kondensatorspannung oder die Summe aus erster und zweiter Kondensatorspannung. Mit dem Vollbrückenmodul sind ebenfalls vier Schaltzustände erreichbar, wobei zwei dieser Schaltzustände zur Spannung null an den Anschlüssen des Schaltmoduls führen. Darüber hinaus lässt sich die positive und die negative Kondensatorspannung an den Anschlüssen des Submoduls erzeugen. Die genannten Schaltzustände von Doppelhalbbrückenmodul und Vollbrückenmodul sind unabhängig von der Stromflussrichtung des Stroms durch das entsprechende Submodul. Als Halbleiterschalter kommen für Mittel- und Hochspannungsanwendungen aufgrund ihrer Sperrfähigkeit oftmals IGBT Module mit antiparalleler Diode zum Einsatz.

Aus der Betrachtung der Schaltzustände ist erkennbar, dass sich durch die Verwendung eines Doppelhalbbrückenmoduls der Spannungsbereich des modularen Bremsstellers in etwa um den doppelten Wert erweitern lässt, im Vergleich zu dem Vollbrückenmodul, da sich in einem der Schaltzustände des Doppelhalbbrückenmoduls die Spannungen an den beiden Kondensatoren zu einer Ausgangsspannung addieren.

Der Strom durch den Bremswiderstand wird mit Hilfe der Spannung über der Reihenschaltung der Submodule gesteuert oder geregelt. Der Strom weist einen Gleichanteil und Wechselanteil auf. Der Wechselanteil hat einen periodischen Verlauf und einen Mittelwert von null. Mit dem Gleichanteil wird die durch den modularen Bremssteller in Wärme umzuwandelnde Leistung gesteuert oder geregelt, der Wechselanteil wird zur Einhaltung des Energiegleichgewichts in den Submodulen und damit zur Stabilisierung des Betriebs des modularen Bremsstellers genutzt. Die Höhe des Wechselanteils von Spannung über der Reihenschaltung der Submodule und Strom durch den modularen Bremssteller hängt dabei unter anderem von dem Widerstandswert des Bremswiderstands ab. Durch die Verwendung von Vollbrückenmodulen ist auch eine negative Spannung über der Reihenschaltung der Submodule erzeugbar. Damit ist auch ein Betrieb realisierbar, bei dem die Amplitude des Wechselanteils den Gleichanteil übersteigt. Dies erhöht bei gegebenem Widerstand den Leistungsbereich des modularen Bremsstellers. Je mehr Vollbrückenmodule verwendet werden, desto größer ist der Betrag einer über der Reihenschaltung der Submodule erzeugten negativen Spannung.

Es hat sich damit ein hybrider Aufbau des modularen Bremsstellers als besonders positiv erwiesen, bei dem die Anzahl der Vollbrückenmodule sich aus der Anforderung an den Betrag einer negativen Spannung über der Reihenschaltung der Submodule zur Erzeugung eines entsprechend hohen Stromes durch den modularen Bremssteller ergibt. Gleichzeitig wird durch die Verwendung von Doppelbrückenmodulen eine hohe Betriebsspannung des modularen Bremsstellers erreicht. Beide Arten der Submodule, d.h. das Vollbrückenmodul und das Doppelhalbbrückenmodul, nehmen aufgrund der gleichen Anzahl von Halbleitern und der damit verbundenen Ansteuerschaltung nahezu den gleichen Bauraum ein. Somit lässt sich ein mechanisches Gerüst zur Aufnahme von Submodulen eines modularen Bremsstellers auf einfache Weise mit Doppelhalbbrückenmodulen und Vollbrückenmodulen befüllen. Die entsprechenden Montageplätze für die Submodule können gleich ausgeführt sein und eignen sich damit sowohl für die Aufnahme eines Doppelhalbbrückenmoduls als auch für die Aufnahme eine Vollbrückenmoduls. Damit kann auf besonders vorteilhafte Weise ein modularer Bremssteller mit hoher Leistungsfähigkeit und hoher Betriebsspannung modular und damit einfach und kostengünstig aufgebaut werden. Ebenso kann für die Ansteuerung eines Doppelhalbbrückenmoduls und eines Vollbrückenmoduls die gleiche Ansteuerschaltung verwendet werden, da beide Arten von Modulen die gleiche Anzahl an Halbleiterschaltern (4 Halbleiterschalter) aufweisen. Somit ist der hybride Aufbau des modularen Bremsstellers besonders einfach und kostengünstig herstellbar und deckt einen großen Bereich an Leistungsfähigkeit und Betriebsspannung ab.

Der modulare Bremssteller wird meist in vorteilhafter Weise in Kombination mit einem Stromrichter betrieben. Dabei ist der modulare Bremssteller Teil eines Antriebssystems, bei dem nicht rückspeisbare Energie, beispielsweise aus einer elektrischen Maschine bei einem Bremsvorgang in Wärme umgewandelt wird. Dieser Vorgang ist im Gegensatz zum Bremsen mit einer mechanischen Bremse verschleißfrei.

Bei dem erfindungsgemäßen Verfahren, wobei die Submodule eine Spannung über den in Reihe angeordneten Submodulen erzeugen, die zumindest zeitweise einen negativen und einen positiven Spannungsbereich umfassen, wird zumindest zeitweise durch die Submodule eine über den in Reihe angeordneten Submodulen negative Spannung erzeugt. Dies geschieht, um einen Strom durch den modularen Bremssteller zu erzeugen, der größer ist, als ein Strom, der sich erzeugen ließe, wenn die Zwischenkreisspannung des elektrischen Antriebs bzw. die Betriebsspannung des modularen Bremsstellers über dem Bremswiderstand anliegt.

Bei einer vorteilhaften Ausgestaltung der Erfindung weist mindestens eines der Submodule, insbesondere alle Submodule, jeweils einen Bypassschalter auf, der eingerichtet ist, die Anschlüsse des jeweiligen Submoduls kurzzuschließen. Um auch bei Ausfall eines Submoduls weiter in Betrieb bleiben zu können, hat es sich als vorteilhaft erwiesen, eine Redundanz zu schaffen. Dabei tragen nicht alle Submodule dazu bei, die Zwischenkreisspannung über der Reihenschaltung der Submodule erzeugen zu können. Dann kann bei Ausfall eines Submoduls das entsprechende Submodul mittels des Bypassschalters überbrückt werden und stört damit nicht den Betrieb des modularen Bremsstellers.

Bei einer weiteren vorteilhaften Ausgestaltung der Erfindung ist der Stromrichter als modularer Multilevel-Stromrichter ausgebildet. Besonders vorteilhaft ist es, den modularen Bremssteller mit dem modularen Multilevel-Stromrichter, auch als M2C Stromrichter bezeichnet, zu einem elektrischen Antrieb zu kombinieren. Dabei können für den modularen Multilevel-Stromrichter als auch für den modularen Bremssteller baugleiche Submodule zum Einsatz kommen. Dabei kann der modulare Multilevel-Stromrichter aus Doppelhalbbrückenmodulen, Vollbrückenmodulen oder einer Kombination dieser beiden Submodultypen aufgebaut sein. Ebenso kann die gleiche Hardware für die Steuerung der Submodule verwendet werden. Durch den modularen Aufbau, sowohl von Stromrichter als auch vom modularen Bremssteller kann der elektrische Antrieb einfach an eine geforderte Leistungsanforderung durch die Wahl einer entsprechenden Anzahl von Submodulen im Stromrichter und im modularen Bremssteller angepasst werden. Durch die baugleiche Ausführung der Submodule im modularen Bremssteller und Multilevel-Stromrichter kann ein hoher Anteil an Gleichteilen erzielt werden. Dies wirkt sich positiv auf die Zuverlässigkeit und die Herstellkosten einer derartigen Antriebseinheit aus.

Der modulare Bremssteller kann an die Gleichspannungsseite von Stromrichtern mit beliebigem Aufbau angeschlossen werden und ist nicht auf die Anwendung mit einem modularen Multilevel-Stromrichter beschränkt.

Im Folgenden wird die Erfindung anhand der in den Figuren dargestellten Ausführungsbeispiele näher beschrieben und erläutert. Es zeigen:
- FIG 1 und FIG 2: Ausführungsbeispiele des modularen Bremsstellers,
- FIG 3: ein Submodul als Vollbrückenmodul,
- FIG 4: ein Submodul als Doppelhalbbrückenmodul,
- FIG 5 und FIG 6: Ausführungsbeispiele von vorgeschlagenen elektrischen Antrieben,
- FIG 7: Zeitverläufe elektrischer Größen und
- FIG 8: Arbeitsbereiche des modularen Bremsstellers.

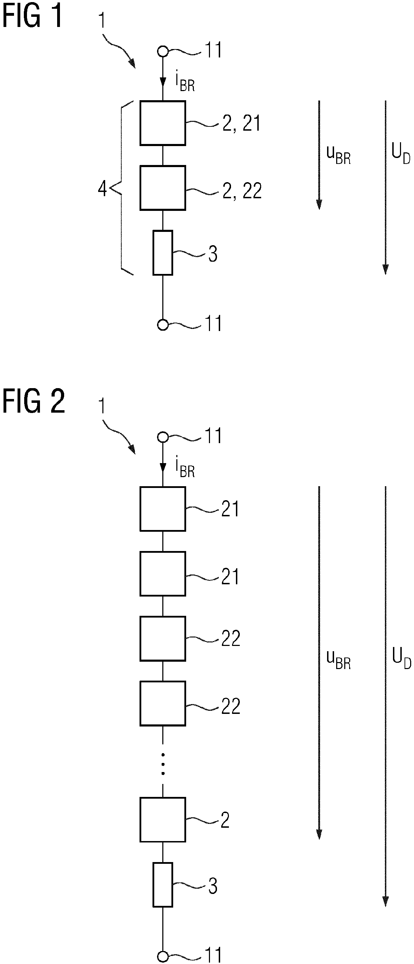

Die FIG 1 zeigt einen modularen Bremssteller 1. Dieser weist eine Reihenschaltung 4 von mindestens zwei Submodulen 2 und einem Bremswiderstand 3 auf. Die Reihenschaltung 4 umfasst dabei auch eine Reihenschaltung der Submodule 2. Bei den Submodulen 2 ist mindestens ein Submodul 2 als Vollbrückenmodul 21 und ein Submodul 2 als Doppelhalbbrückenmodul 22 ausgebildet. Der modulare Bremssteller kann auch, wie in FIG 2 dargestellt, eine Vielzahl von Submodulen 2 aufweisen. Dabei kann es sich bei den Submodulen 2 um Vollbrückenmodule 21 und Doppelhalbbrückenmodule 22 handeln. Allerdings ist auch der Einsatz aller anderen bisher bekannten Submodule 2 möglich. Der modulare Bremssteller 1 ist dazu eingerichtet, an seinen Anschlüssen 11 mit einem Zwischenkreis 9 eines Stromrichters 5, 51 verbunden zu werden.

Über der Reihenschaltung der Submodule 2 lässt sich eine Spannung u_{BR} erzeugen. Mit der Spannung u_{BR} lässt sich ein Strom i_{BR} durch den modularen Bremssteller 1 bewirken. Der Strom durch den Bremswiderstand 3 bewirkt die Umwandlung von elektrischer Energie in Wärme. Über dem modularen Bremssteller 1 liegt die Betriebsspannung U_{D} an. Wird der modulare Bremssteller 1 mit dem Zwischenkreis eines Stromrichters verbunden, so liegt an dem modularen Bremssteller die Zwischenkreisspannung an. In diesem Fall spricht man davon, dass der modulare Bremssteller 1 mit der Gleichspannungsseite des Stromrichters verbunden ist.

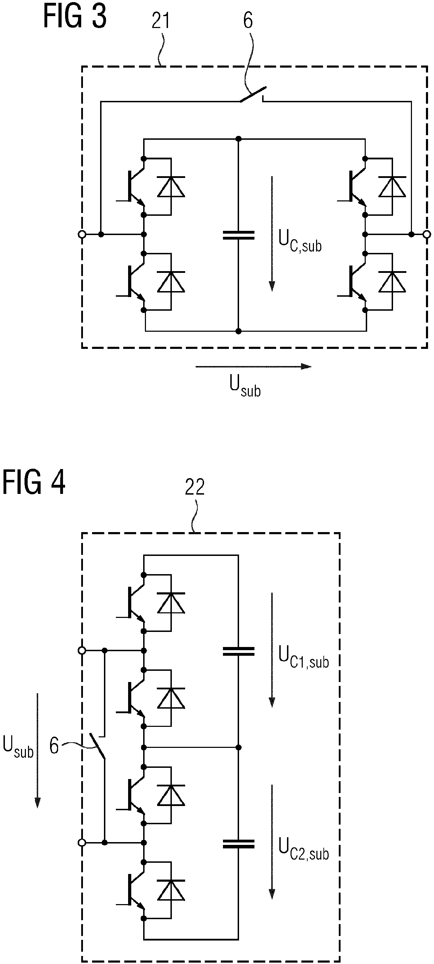

Die Figuren 3 und 4 zeigen Ausführungsbeispiele von Submodulen 2. Dabei zeigt die FIG 3 ein Vollbrückenmodul 21 und die FIG 4 ein Doppelhalbbrückenmodul. Diese sind Teil des vorgeschlagenen Aufbaus. Darüber hinaus kann der modulare Bremssteller 1 mit bereits bekannten Submodulen 2 erweitert werden Zur Vermeidung von Wiederholungen wird auf die Beschreibung zu den Figuren 1 und 2 sowie auf die dort eingeführten Bezugszeichen verwiesen.

Die dargestellten Ausführungsbeispiele der Submodule 2, 21, 22 umfassen vier Halbleiterschalter und mindestens einen Kondensator. Durch Schalthandlungen der Halbleiterschalter kann eine Ausgangsspannung U_{sub} an den Anschlüssen des Submoduls 2 erzeugt werden. Dabei übermittelt eine Ansteuerschaltung die Ansteuersignale an die Halbleiterschalter des Submoduls 2. Zur Überbrückung des entsprechenden Submoduls 2 kann optional ein Bypassschalter 6 im Submodul 2 vorgesehen werden.

Die FIG 3 zeigt ein sogenanntes Vollbrückenmodul. Dies weist vier Halbleiterschalter und einen Kondensator auf. An dem Kondensator liegt die Spannung U_{C,sub} an. Durch Schalthandlungen der Halbleiterschalter kann die Ausgangsspannung U_{sub} von null, der positiven oder der negativen Kondensatorspannung ±U_{C,sub} an den Anschlüssen 11 des Submoduls 2 erzeugt werden.

Die FIG 4 zeigt ein sogenanntes Doppelbrückenmodul. Dies weist vier Halbleiterschalter und zwei Kondensatoren auf. An den Kondensatoren liegt jeweils die Spannung U_{C1,Sub} bzw. U_{C2,sub} an. Durch Schalthandlungen der Halbleiterschalter kann die Ausgangsspannung U_{sub} von null, einer der Kondensatorspannungen U_{C1,sub}, U_{C2,sub} oder der Summe der Kondensatorspannungen U_{C1,sub}, U_{C2,sub} an den Anschlüssen 11 des Submoduls 2 erzeugt werden.

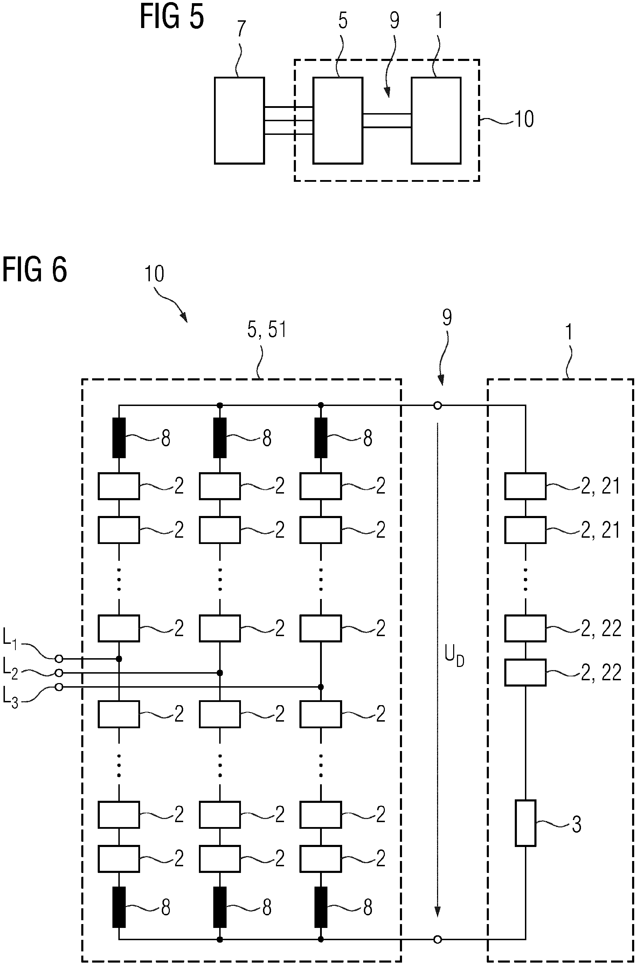

In der FIG 5 ist ein Ausführungsbeispiel eines elektrischen Antriebs 10 dargestellt. Dabei ist eine elektrische Vorrichtung 7 mit der Wechselspannungsseite eines Stromrichters 5 elektrisch verbunden. Der modulare Bremssteller 1 ist mit der Gleichspannungsseite des Stromrichters 5 über den Zwischenkreis 9 verbunden. Bei der elektrischen Vorrichtung 7 kann es sich beispielsweise um ein Energieversorgungsnetz oder eine elektrische Maschine handeln.

Die FIG 6 zeigt einen elektrischen Antrieb 10, bei dem der Stromrichter 5 als modularer Multilevel-Stromrichter 51 ausgebildet ist. Der modulare Bremssteller 1 und der modulare Multilevel-Stromrichter 51 sind über den Zwischenkreis 9, an dem die Spannung U_{D} anliegt, miteinander verbunden. Dabei kann, nicht notwendigerweise, der modulare Multilevel-Stromrichter 51 als Submodule 2 die gleichen Submodule 2, also Vollbrückenmodule 21 und/oder Doppelhalbbrückenmodule 22, aufweisen wie der modulare Bremssteller 1. Die Reihenschaltung der Submodule 2 des modularen Multilevel-Stromrichters 51 weist darüber hinaus noch eine Induktivität 8 auf, die das Regelverhalten des modularen Multilevel-Stromrichters 51 verbessert. Die Anschlüsse L1, L2, L3 stellen die wechselspannungsseitigen Anschlüsse oder kurz die Wechselspannungsseite des modularen Multilevel-Stromrichters 51 dar. In diesem Ausführungsbeispiel ist der modulare Multilevel-Stromrichter 51 dreiphasig ausgeführt. Alternativ ist auch eine einphasige Ausführung mit Neutralleiter oder auch jede beliebige Phasenanzahl möglich, indem entsprechend viele Phasenmodule im modularen Multilevel-Stromrichter 51 vorgesehen werden.

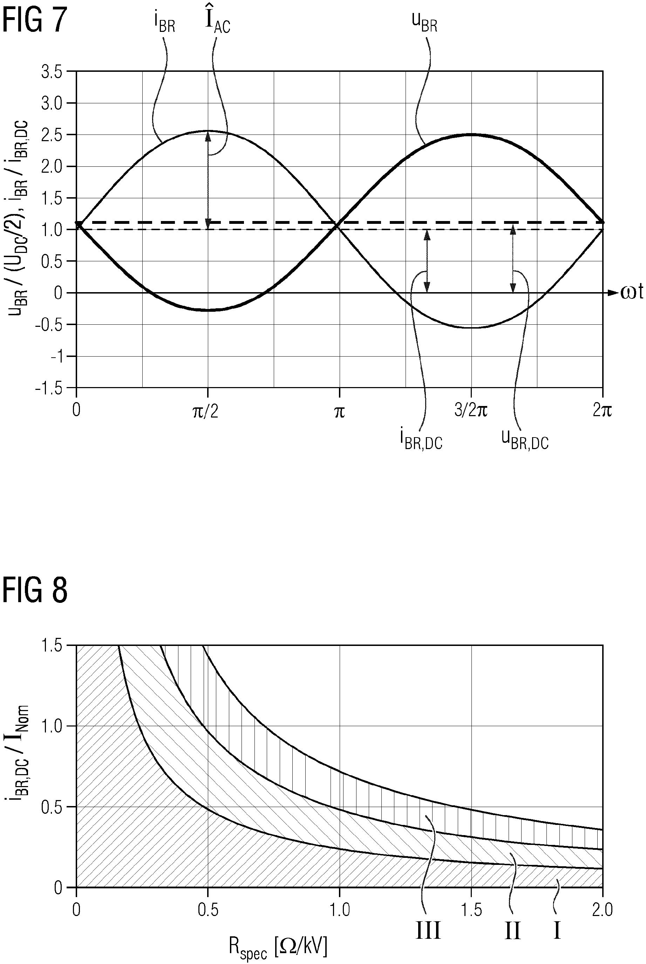

Die FIG 7 zeigt einen typischen Zeitverlauf von der Spannung u_{BR} über der Reihenschaltung der Submodule 2 und dem dazugehörigen Strom i_{BR} durch den modularen Bremssteller 1. Zur Vermeidung von Wiederholungen wird auf die Beschreibung zu den Figuren 1 bis 6, sowie auf die dort eingeführten Bezugszeichen verwiesen. Der vorgeschlagene Aufbau kann mit verschiedenen Verfahren zum Betreiben des modularen Bremsstellers 1 genutzt werden. Eine Möglichkeit ist dabei, die aktive Strom- und Spannungsmodulation mit dem modularen Bremssteller 1. Die Submodule 2 können zusammengefasst als eine steuerbare Spannungsquelle angesehen werden. Vereinfacht beschrieben moduliert der modulare Bremssteller 1 eine Spannung u_{BR} über der Reihenschaltung der Submodule 2 und erzeugt damit einen Strom i_{BR} durch den modularen Bremssteller 1. Dieser Strom i_{BR} weist dabei einen Gleichanteil i_{BR,DC} und einen Wechselanteil i_{BR,AC} auf.

Die Hauptaufgabe des modularen Bremsstellers 1 ist, eine definierte Leistung über der Zeit im Bremswiderstand 3 bzw. der Summe aller in Reihe angeordneten Bremswiderstände in Wärme umzuwandeln. Die in Wärme umzuwandelnde Leistung wird dabei über den Gleichanteil i_{BR,DC} gesteuert oder geregelt. Um das Energiegleichgewicht und die Stabilität des modularen Bremsstellers 1 sicherzustellen weist der Strom i_{BR} durch den modularen Bremssteller einen Wechselanteil i_{BR,AC} auf. Die Amplitude des Wechselanteils des Stroms i_{BR} wird mit Î_{AC} bezeichnet.

Mit unipolaren Submodulen, wie beispielsweise Halbbrückenmodulen oder Doppelhalbbrückenmodulen 22 können keine negativen Spannungen erzeugt werden. Die Realisierung des in FIG 7 dargestellten Zeitverlaufs mit Werten der Spannung u_{BR} von kleiner null setzt daher den Einsatz von bipolaren Submodulen wie beispielsweise Vollbrückenmodule 21 voraus.

Der Betrieb bei höheren Leistungen erhöht den Anteil der modulierten, negativen Spannungen über der Reihenschaltung der Submodule 2, wodurch der Einsatz weiterer Vollbrückenmodule 21 notwendig wird. Ebenfalls führt die Realisierung höherer Leistung zur Verringerung des modulierten negativen Stroms durch den modularen Bremssteller. Da unipolare Submodule lediglich eine positive Klemmenspannung stellen können, wird der negative Anteil des Stroms durch den modularen Bremssteller für die Einhaltung des Energiegleichgewichts benötigt. Dadurch ist der Einsatz von unipolaren Submodulen begrenzt. Der mögliche Betriebsbereich des modularen Bremsstellers 1 kann mit Hilfe des spezifischen Widerstands R_{spec} sowie dem Gleichanteil i_{BR,DC} des Stroms i_{BR} durch den modularen Bremssteller beschrieben werden. Dieser Betriebsbereich ist in FIG 8 dargestellt. Der spezifische Widerstand R_{spec} ist der Widerstandswert R bezogen auf die Zwischenkreisspannung U_{D}, d.h. der Betriebsspannung des modularen Bremsstellers 1. Bei einer gegebenen Systemkonfiguration ist der Gleichanteil i_{BR,DC} des Stroms i_{BR} durch den modularen Bremssteller 1 äquivalent zur durch den modularen Bremssteller 1 umgesetzten Leistung.

Bremsstellervarianten, die lediglich mit unipolaren Submodulen ausgestattet sind, können nur in dem mit I. bezeichneten schraffierten Arbeitsbereich betrieben werden. Nur in diesem Bereich ist die zu erzeugende Spannung u_{BR} über der Reihenschaltung der Submodule 2 stets positiv. Ist das System beispielsweise mit einem spezifischen Widerstand R_{spec}=0,5Ω/kV bestückt, kann mit dem Aufbau ein maximaler Gleichanteil i_{BR,DC}=0,5 I_{Nom} erreicht werden. Dabei beschreibt I_{Nom} den Nominalstrom der eingesetzten Halbleiterschalter. Der vorgeschlagene modulare Bremssteller 1 kann in diesem Arbeitsbereich I ebenfalls betrieben werden. Sollen höhere Leistungen, also Gleichanteile mit i_{BR,DC}>0,5 I_{Nom}, realisiert werden, ist eine negative Spannung u_{BR} über der Reihenschaltung der Submodule 2 zu erzeugen. Dies ist durch den Arbeitsbereich II gekennzeichnet, in dem auch ein Betrieb des vorgeschlagenen modularen Bremsstellers 1 möglich ist. Verglichen mit dem Arbeitsbereich I mit lediglich unipolaren Submodultypen wird durch den vorgeschlagenen modularen Bremssteller 1 die Leistungsfähigkeit des vorgeschlagenen modularen Bremsstellers verdoppelt. Der Arbeitsbereich III lässt sich nur mit einem Aufbau nutzen, der ausschließlich Vollbrückenmodule 21 aufweist. Aufgrund der geringeren erzeugbaren Spannung eines Vollbrückenmoduls 21 gegenüber einem Doppelhalbbrückenmoduls 22 hat sich der Aufbau eines modularen Bremsstellers 1 ausschließlich mit Submodulen 2 des Typs Vollbrückenmodul 21 als nicht wirtschaftlich erwiesen. Im Vergleich dazu bietet der vorgeschlagene modulare Bremssteller 1 eine deutlich günstigere und wirtschaftlichere Lösung.

Es werden insgesamt weniger Submodule für den Aufbau des modularen Bremsstellers benötigt. Wie aus den Verläufen der zu erzeugenden Spannung ersichtlich ist, muss ein höherer Anteil an positiver als an negativer Spannung erzeugt werden. Mit den Doppelhalbbrückenmodulen 22 können verglichen zum Vollbrückenmodul 21 bei gleichem Materialeinsatz eine doppelt so hohe positive Ausgangsspannung erreicht werden. Ein weiterer entscheidender Vorteil des Einsatzes der Kombination von Doppelhalbbrückenmodulen 22 und Vollbrückenmodulen 21 ist der mögliche mechanische Aufbau dieser beiden Varianten. Für ein System sind zum Aufbau der beiden Submodule dieselben Komponenten notwendig. Lediglich die Verschienung der einzelnen Module zwischen den Halbleitern und den Submodulkondensatoren ist unterschiedlich. Sie bieten jedoch dieselben Abmaße, Kühlwasseranschlüsse, elektrische Anschlüsse zur Verschienung, Ansteuerungen etc. Für ein derartiges System erübrigt sich die Anpassung des Aufbaus, wie beispielsweise eines Schranksystems, und die umliegende Peripherie auf die konkrete Ausgestaltung der Submodule. Vielmehr sind in dem Aufbau bzw. Schranksystem Aufnahmevorrichtungen enthalten, die ohne Veränderungen, also veränderungsfrei, Vollbrückenmodule und Doppelhalbbrückenmodule aufnehmen können. Die Anzahl und das Verhältnis der installierten Vollbrückenmodule 21 und Doppelhalbbrückenmodule 22 kann so in einem Aufbau frei variiert und skaliert werden.

Zusammenfassend betrifft die Erfindung einen modularen Bremssteller 1, aufweisend einen Bremswiderstand 3 und mindestens zwei Submodule 2, wobei der Bremswiderstand 3 und die Submodule 2 in einer Reihenschaltung 4 angeordnet sind. Zur Verbesserung des modularen Bremsstellers 1 wird vorgeschlagen, dass mindestens ein Submodul 2 als Vollbrückenmodul 21 und mindestens ein Submodul 2 als Doppelhalbbrückenmodul 22 ausgebildet ist. Weiter betrifft die Erfindung einen elektrischen Antrieb 10, aufweisend einen derartigen modularen Bremssteller 1 und einen Stromrichter 5, wobei der Stromrichter 5 gleichspannungsseitig mit dem modularen Bremssteller 1 elektrisch verbunden ist. Die Erfindung betrifft ferner ein Verfahren zum Betreiben eines derartigen modularen Bremsstellers 1 oder eines derartigen elektrischen Antriebs 10, wobei die Submodule 2 eine Spannung u_{BR} über den in Reihe angeordneten Submodulen 2 erzeugen, die zumindest zeitweise einen negativen und einen positiven Spannungsbereich umfassen.

## Patentansprüche

1. Modularer Bremssteller (1), aufweisend einen Bremswiderstand (3) und mindestens zwei Submodule (2), wobei der Bremswiderstand (3) und die Submodule (2) in einer Reihenschaltung (4) angeordnet sind, wobei mindestens ein Submodul (2) als Vollbrückenmodul (21) und mindestens ein Submodul (2) als Doppelhalbbrückenmodul (22) ausgebildet ist.

2. Modularer Bremssteller (1) nach Anspruch 1, wobei mindestens eines der Submodule (2), insbesondere alle Submodule (2), jeweils einen Bypassschalter (6) aufweist, der eingerichtet ist, die Anschlüsse (25) des jeweiligen Submoduls (2) kurzzuschließen.

3. Elektrischer Antrieb (10), aufweisend einen modularen Bremssteller (1) nach einem der Ansprüche 1 oder 2 und einen Stromrichter (5), wobei der Stromrichter (5) gleichspannungsseitig mit dem modularen Bremssteller (1) elektrisch verbunden ist.

4. Elektrischer Antrieb (10) nach Anspruch 3, wobei der Stromrichter (5) als modularer Multilevel-Stromrichter (51) ausgebildet ist.

5. Verfahren zum Betreiben eines modularen Bremsstellers (1) nach einem der Ansprüche 1 oder 2 oder eines elektrischen Antriebs (10) nach einem der Ansprüche 3 oder 4, wobei die Submodule (2) eine Spannung (u_{BR}) über den in Reihe angeordneten Submodulen (2) erzeugen, die zumindest zeitweise einen negativen und einen positiven Spannungsbereich umfassen.
